# EUROPEAN PATENT APPLICATION

(11) **EP 1 744 564 A1**
(43) Date of publication of application: **17.01.2007**
(21) Application number: 05737297.1
(22) Date of filing: 26.04.2005
(51) Int. Cl.: H04N 13/00

(54) **IMAGE PROCESSOR**

(30) Priority: 26.04.2004 JP 2004130126
(71) Applicant: Olympus Corporation, Tokyo 151-0072 (JP)
(72) Inventor: Yoshida, Hideaki, Shibuya-ku, Tokyo 1510072 (JP)
(74) Representative: von Hellfeld, Axel
(86) International application number: PCT/JP2005/007865
(87) International publication number: WO 2005/112475

(57) **Abstract**

An integrated image and monovision images are easily discriminated from each other and fusion is effectively supported.

An image processing apparatus includes collateral image setting means 50a for setting collateral images on a plurality of monocular images on the same subject obtained with a given parallax at partial or overall edge sides of the plurality of monocular images, image pattern setting means 50a for setting image patterns on the respective monocular images of the plurality of monocular images for placement on the respective collateral images in given relative positional relationships, respectively, and integrated image generating section 50b supplied with the plurality of monocular images for generating one integrated image on the basis of the plurality of monocular images and the collateral images placed with the image patterns.

## Description

### Technical Field

The present invention relates to an image processing apparatus suitable for an electronic camera or the like for picking up a stereo image.

### Background Art

A wide variety of systems for shooting and recording an image, containing stereo information, and reproducing the image for observation have heretofore been proposed. Among these, a so-called two-eye-type stereo system, which is arranged to record two images with a parallax, corresponding to visual points of left and right eyes, and provides these two images to the left and right eyes, individually, has the simplest structure capable of producing a remarkable effect in spite of low cost and has been used from old times up to the present date.

With the two-eye-type stereo system, even though a so-called personal-use-type device has the restrictions of only one person to being able to observe the image at one time, a system employing a stereo pair images is the most fundamental and classic method and has been still widely used today as a system enabling the observation of a clear stereo image at an extremely low cost.

An example of a stereo image pickup apparatus employing a stereo adapter is disclosed in Japanese Unexamined Patent Application Publication No. 2002-218506 (hereinafter referred to as Patent Document 1). Patent Document 1 discloses technology wherein a system controller includes a stereo adapter detector section for detecting the loading or unloading of a stereo adapter, an automatic exposure (AE) control section for analyzing a subject image signal, related to a photometric area, and for calculating photometric information needed for exposure control, and a photometric area setting section for setting the above-described photometric area and having a function of setting photometric areas different from each other in accordance with a normal shooting mode and a stereo shooting mode for thereby enabling the setting of photometric areas optimum for the normal shooting mode and the stereo shooting mode.

In such a way, the two-eye-type stereo system adopts a method of displaying the same subject on one image frame at left and right areas thereof in the form of two images (hereinafter referred to as monocular images) misaligned from each other in accordance with a parallax. That is, with the two-eye-type stereo system, with a view to obtaining a stereoscopic feeling from the one image frame (hereinafter also referred to as an integrated image) with the monocular images placed on the left and right areas of the image frame, the monocular images placed in the integrated image on the left and right areas thereof are observed with the right eye or the left eye, individually. Fusing the two images observed with the left and right eyes into one image enables an image to be recognized with a stereoscopic feeling. The image (hereinafter referred to as a fused image) appearing on recognition causes perspective to occur in various parts depending on the amount of misalignment in various parts of the left and right monocular images.

It is not always true that due to errors caused in an optical system such as a mirror or an aperture diaphragm inside the stereo adapter, a whole area of the integrated image becomes monocular images contributing to a stereoscopic vision. For instance, edgewise areas of the monocular images or a boundary area between the respective monocular images do not contribute to the stereoscopic vision with the resultant deterioration caused in image quality. To address such an issue, an attempt is made to probably adopt a method wherein a circumferential area or a center area in a lateral direction of the integrated image is placed with a band-like image (hereinafter referred to as a collateral image) with, for instance, a black level to render an area surrounded with the collateral image to be effective for thereby making it possible to easily recognize ranges of the effective monocular images.

For the integrated image including such a collateral image, as a matter of course, image processing may be preferably implemented in a manner different from image processing of a common monovision image. For instance, exposure correction of the common monovision image is executed with a reference on a luminance level at a central area of the image. In contrast, for the integrated image, the exposure correction may be preferably executed not on the basis of a collateral image area at a central area of the image but on the basis of a luminance level at a central area of the respective monocular images.

However, in general, the integrated image has a low level of common knowledge and no recognition is probably made to find that the integrated image having the collateral image is an image for a stereoscopic vision. For this reason, an issue arises with the occurrence of a probability wherein the integrated image is liable to be subjected to the same image processing as that of the common monovision image processing or the integrated image is erroneously recognized to be an image resulting from shooting mistake upon which no necessary image processing is executed.

As set forth above, further, the fused image can be obtained upon observing the left and right monocular images with left and right eyes, respectively. However, due to an individual difference caused in fusing of such images, even if the integrated image is appropriately observed, an issue arises in that it's not always true for the fused image to be obtained.

It is therefore an object of the present invention to provide an image processing apparatus that is capable of easily distinguishing an integrated image and monovision images from each other while effectively supporting the fusion for enabling the recognition of a fused image from an integrated image.

### Disclosure of Invention

The present invention provides an image processing apparatus comprising collateral image setting means for setting collateral images on a plurality of monocular images of the same subject obtained with a given parallax at partial or overall edge sides of the plurality of monocular images, image pattern setting means for setting respective image patterns for placement on the collateral images with respective given relative positional relationships for the respective monocular images of the plurality of monocular images, and integrated image generating means supplied with the plurality of monocular images for generating one integrated image on the basis of the plurality of monocular images and the collateral images placed with the image patterns.

In the present invention, the collateral image setting means sets the collateral images to be placed on the partial or overall edge sides of the plurality of monocular images. The image pattern setting means sets the respective image patterns for placement on the collateral images of the plurality of monocular images with the given relative positional relationships. The integrated image generating means is supplied with the plurality of monocular images on the same subject with the given parallax and generates one integrated image on the basis of the plurality of monocular images and the collateral images on which the image patterns are placed.

### Brief Description of the Drawings

Fig. 1 is a block diagram showing an electronic camera incorporating an image processing apparatus of a first embodiment according to the present invention.
Fig. 2 is an illustrative view showing a configuration of a mirror type stereo adapter shown in Fig. 1.
Fig. 3 is an illustrative view for explaining an integrated image.
Fig. 4 is an illustrative view showing another example of a collateral image.
Fig. 5 is an illustrative view showing another example of the collateral image.
Fig. 6 is an illustrative view showing an image pattern of a character "T" in a case where a stereoscopic character string "STEREO" is adopted as fusion aid patterns.
Fig. 7 is an illustrative view showing an example of a data format of an image file.

### Best Mode for Carrying Out the Invention

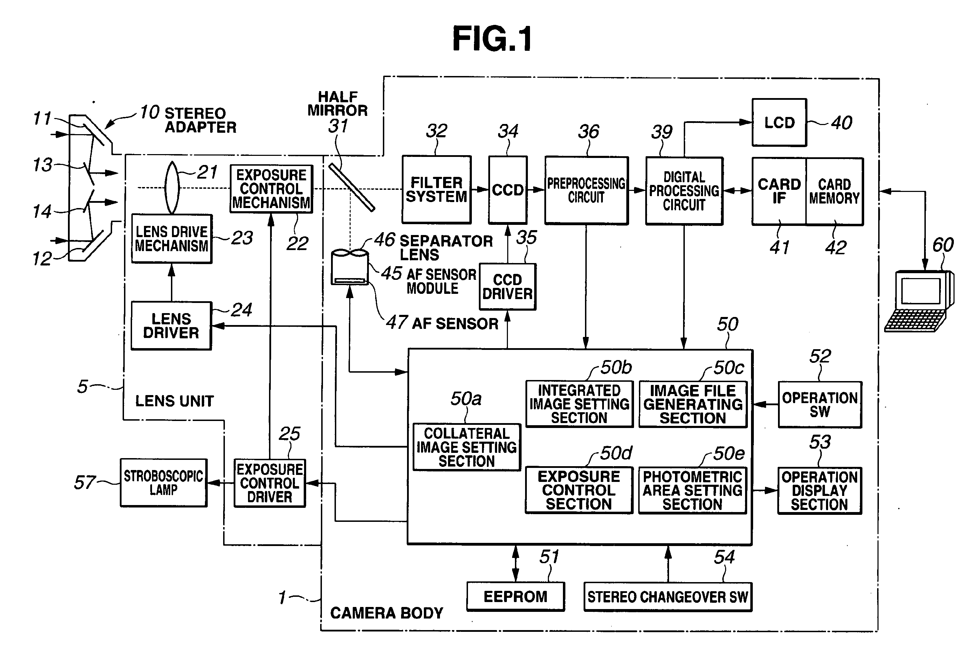

Hereunder, an embodiment of the present invention is described in detail with reference to the accompanying drawings. Fig. 1 is a block diagram showing an electronic camera incorporating an image processing apparatus of a first embodiment according to the present invention.

### (First Embodiment)

In Fig. 1, an electronic camera comprises a camera body 1, a lens unit 5 having a lens barrel, and a stereo adapter 10 for shooting a stereo image. In the electronic camera, the stereo adapter 10 of a mirror type is detachably mounted on the lens unit 5. The stereo adapter 10 takes the form of a configuration that includes mirrors 11, 12, placed in positions spaced from each other by a distance corresponding to parallax, and mirrors 13, 14 for guiding light beams, reflected from the mirrors 11, 12, to the camera.

The light beams, passing through the mirrors 11, 13 and the mirrors 12, 14 disposed inside the stereo adapter 10, pass through a shooting lens group 21 to an exposure control mechanism 22 both of which are provided in the lens unit 5, and then are guided to a half mirror 31 mounted inside the camera body 1.

The lens unit 5 comprises the shooting lens group 21, the exposure control mechanism 22, a lens drive mechanism 23, a lens driver 24 and an exposure control driver 25.

The shooting lens group 21 acts as a main image pickup optical system, which is capable of picking up an image (as a monocular picked up image) with normal monovision in a state in which no stereo adapter 10 is mounted, and is driven with the lens drive mechanism 23 to adjust the focusing or zooming. The lens driver 24 drives the lens drive mechanism 23. The exposure control mechanism 22 is configured to control a lens diaphragm of the shooting lens group 21 and a shutter apparatus (not shown). The exposure control driver 25 controls the exposure control mechanism 22.

The light beams, guided to the camera body 1 from the lens unit 5, pass through the half mirror 31 and are then guided through a low pass and infrared cut filter system 32 to a CCD color image pickup element 34 for image formation. A CCD driver 35 controllably drives the CCD color image pickup element 34 for conversion of an optical image of the photogenic subject into an electric signal. In addition, for the CCD color image pickup element 34, use is made of, for instance, an image pickup element of a vertical type overflow drain structure of an interline type and progressive (sequential) scan type.

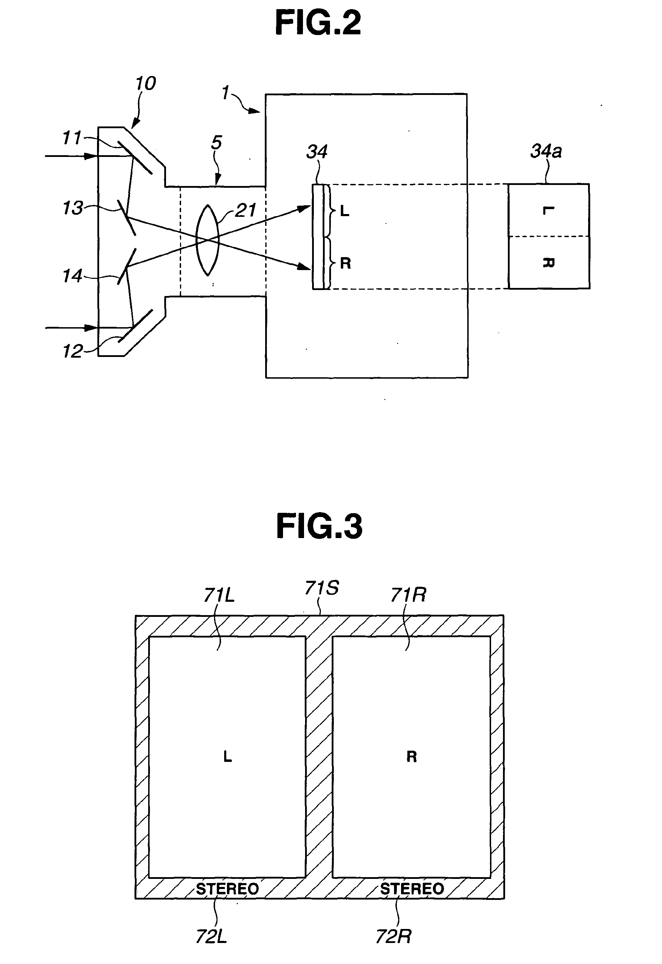

Fig. 2 is an illustrative view showing a configuration of the mirror type stereo adapter shown in Fig. 1.

In Fig. 2, the mirror type stereo adapter 10 is detachably mounted to the lens unit 5 having the mirror barrel mounted to the camera body 1. The stereo adapter 10 takes the form of a configuration that includes the mirrors 11, 12, disposed in positions spaced from each other with a degree of parallax, and the mirrors 13, 14 for guiding light beams, reflected by the mirrors 11, 12, to the camera.

The light beam incident onto the right vision mirror 11 of the stereo adapter 10 passes through the mirror 13 and the shooting lens group 21 and is formed on a region R of an image pickup surface 34a of the CCD color image pickup element 34. Likewise, the light beam incident onto the left vision mirror 12 passes through the mirror 14 and the shooting lens group 21 and is formed on a region L of the image pickup surface 34a of the CCD color image pickup element 34.

The CCD color image pickup element 34 executes photoelectric conversion to generate a signal that is supplied through a preprocessing circuit 36, including an A/D converter, to a digital processing circuit 39 for executing color signal generation processing, matrix conversion processing and other various digital processing. The digital processing circuit 39 processes the digitized image signal to generate color image data.

A LCD display section 40 is connected to the digital processing circuit 39, to which a memory card 42, such as CF (Compact Flash Memory Card) and a smart media or the like, is connected via a card interface (IF) 41. The LCD display section 40 acts to provide a display on the basis of color image data and the memory card 42 acts to store color image data.

In addition, the memory card 42 can be loaded to an external personal computer 60. An image recorded in the memory card 42 can be displayed on the personal computer 60 and available to perform image processing or the like. Moreover, the image recorded in the memory card 42 can be printed out using a printer that is not shown.

The half mirror 31 is configured to allow an incident subject image to be partially reflected and a reflected light beam to be guided to an AF sensor module 45. The AF sensor module 45 acts to perform focus detection depending on a light beam incident through the shooting lens group 21. The AF sensor module 45 comprises a pupil division separator lens 46 and an AF sensor 47 composed of a line sensor.

A system controller 50, composed of a CPU or the like, acts to integrally control various parts of the camera body 1 and the lens unit 5. Connected to the system controller 50 are, in addition to the lens driver 24, the exposure control driver 25, the CCD driver 35, the preprocessing circuit 36, the digital preprocessing circuit 39 and the AF sensor module 45, an operation switch section 52, an operation display section 53, a non-volatile memory (EEPROM) 51 and a stereo changeover switch (SW) 54.

The operation switch section 52 comprises a release switch and a variety of switches for setting a shooting mode or the like. The operation display section 53 acts as a display section for providing a display of an operational status, a mode state, etc. of the camera.

The EEPROM 51 includes a memory in which various setting information or the like are stored. The stereo changeover switch 54 acts as a changeover switch to change over modes when the stereo adapter 10 is mounted to the lens unit 5. Further, while the present embodiment is herein described with reference to an example wherein the changeover of the shooting mode is accomplished by operating the stereo changeover switch 54, the present invention is not limited to such operation. For instance, the stereo adapter 10 may be configured to have a detecting function to automatically perform the changeover of the shooting modes.

The system controller 50 allows the exposure control mechanism 22 and the CCD driver 35 to control a drive state of the CCD color image pickup element 34, thereby performing exposure (accumulation of charges) and readout of the signals. The system controller 50 allows an output of the CCD 34 to be applied through the preprocessing circuit 36 to the digital processing circuit 39 for carrying out various signal processing such that the resulting signal is recorded in the memory card 42 via the card interface 41.

A stroboscopic lamp 57, acting to provide a flashlight, is controlled with the system controller 50 via the exposure control driver 25 placed inside the lens unit 5.

The system controller 50 further includes an exposure control section 50d and a photometric area setting section 50e. The exposure control section 50d acts to analyze a subject image signal related to a photometric area and calculate exposure information needed for exposure control. Moreover, the photometric area setting section 50e is configured so as to allow the exposure control section 50d to set the photometric area.

With the present embodiment, the system controller 50 further includes a collateral image setting section 50a, an integrated image generating section 50b and an image file generating section 50c.

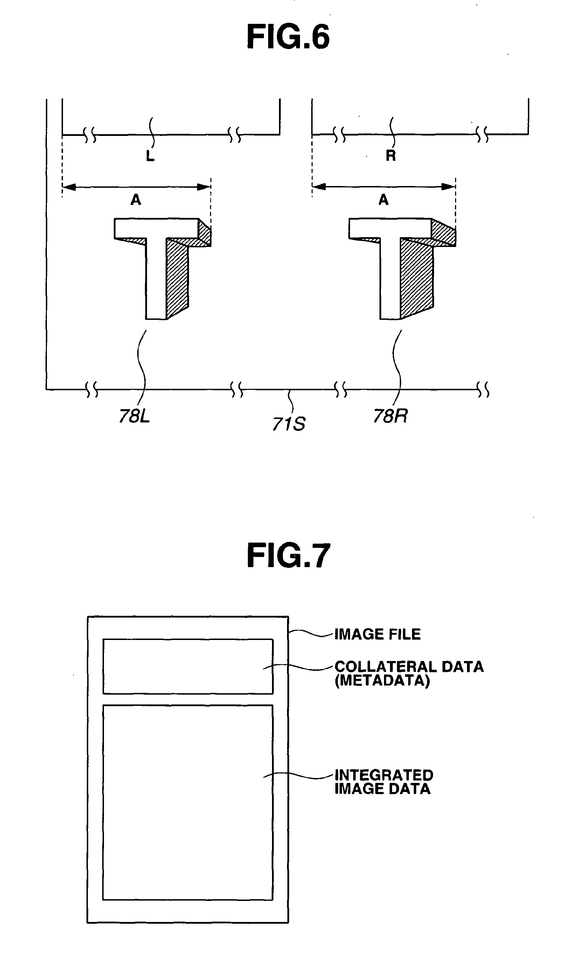

The integrated image generating section 50b acts to generate an integrated image including two monocular images. The image file generating section 50c is configured so as to enable the conversion of the integrated image into an electronic image file with a given format and output. For instance, the image file generating section 50c executes compression processing of the integrated image for generating a digital image file, added with collateral data (metadata), with a given format shown in Fig. 7.

The collateral image setting section 50a acts to set a collateral image that specifies effective ranges of monocular images contained in the integrated image. The collateral image is set to an edge side of the integrated image in a zonation with a given level. The collateral image setting section 50a is configured so as to command the integrated image generating section 50b for the collateral image to be set on. With the command given by the collateral image setting section 50a, the integrated image generating section 50b operates to include the collateral image in the integrated image. In addition, the collateral image setting section 50a can set an arbitrary image pattern as the collateral image.

The subject optical images, formed on the respective areas LR in Fig. 2, encounter an eclipse, caused in a boundary portion in actual practice, or deviated image forming positions. With a view to correcting such an eclipse or positional deviations or the like, the trimming is carried out on given portions of the areas LR to allow areas (hereinafter referred to as image frames) to be set for effective monocular images. The collateral image setting section 50a sets collateral images so as to surround these image frames.

With the present embodiment, further, the collateral image setting section 50a, acting as an image pattern setting means, is configured so as to enable at least one of a given image pattern (hereinafter referred to as a discriminating pattern), through which discrimination is made that an image belongs to an integrated image, and another given image pattern (hereinafter referred to as a fusion aid pattern), operative to support the fusion upon observing the integrated image for making it easy to obtain a fused image, to be set to the collateral image.

For instance, the collateral image setting section 50a adopts character strings "STEREO" as the image patterns doubling as the discriminating pattern and the fusion aid pattern. The collateral image setting section 50a allows the image patterns "STEREO" to be located in upper or lower collateral image areas of the monocular images, respectively. In such case, the collateral image setting section 50a allows the same patterns "STEREO", playing roles as the fusion aid patterns to be located for the monocular images, respectively, in relative positions thereof in, for instance, accord with each other. That is, suppose that the left and right monocular images are identical to each other in image frame size and magnification and the fusion aid patterns are identical to each other in shape and size, the relative positions of the monocular images match each other. In such a case, the fusion aid patterns are stereotaxic on reference positions with no depth feeling appearing in the fused image, that is, on a plane of the image frames.

In addition, while it is conceived that permitting the fusion aid patterns to be stereotaxic on the plane of the image frames enables the fusion to be effectively supported, no need arises for the fusion aid patterns to be necessarily stereotaxic on the plane of the image frames depending on the pattern or the like of the respective monocular images. That is, the respective fusion aid patterns, disposed in compliance to the monocular images, have no need to necessarily match each other in shape and size. Suitably setting the shapes and sizes of the patterns and the positions relative to the respective monocular images makes it possible to allow the patterns to be stereotaxic so as to provide a given depth feeling or allow the provision of stereoscopic shape to support the fusion.

Next, the operation of the present embodiment configured in such a structure is described with reference to Fig. 3. Fig. 3 is an illustrative view for explaining an integrated image.

Now, suppose the stereo changeover switch 54 commands a stereo shooting mode. A subject optical image incident through the stereo adapter 10 passes through the shooting lens group 21, the exposure control mechanism 22, the half mirror 31 and the filter system 32 and is formed on the image pickup surface of the CCD color image pickup element 34. As shown in Fig. 2, one image, including the left and right monocular images L, R, is obtained with the CCD color image pickup element 34. The image signal delivered from the CCD color image pickup element 34 is input to the controller 50 through the preprocessing circuit 36.

The collateral image setting section 50a of the controller 50 sets collateral image regions in zonation to zoning areas of effective monocular images in consideration of an eclipse and deviation in image forming position. The integrated image generating section 50b generates an integrated image including the collateral images on the basis of the setting content of the collateral image setting section 50a.

Fig. 3 shows the integrated image generated by the integrated image generating section 50b. A hatched area in Fig. 3 shows the collateral images in zonation set by the collateral image setting section 50a. That is, as shown in Fig. 3, the integrated image includes left and right monocular images 71 L, 71 R with edge sides thereof provided with collateral images 71 s in zonation. In addition, references L, R in Fig. 3 designate the monocular images arranged on left and right areas.

Further, with present embodiment, the collateral image setting means 50a allows character patterns "STEREO" 72L, 72R, acting as the image patterns doubling as the discriminating pattern and the fusion aid pattern, to be displayed on the collateral image 71s. As shown in Fig. 3, the integrated image generating section 50b locates the character patterns "STEREO" 72L, 72R in the respective collateral images 71s at areas directly below the monocular images 71 L, 7 1 R, respectively. These character patterns 72L, 72R are formed in the same shape and size and the relative positional relationships of the monocular images 71 L, 7 1 R are set to be identical to each other.

For instance, the collateral image setting section 50a is capable of setting the relative positional relationships of the character patterns 72L, 72R for the monocular images 71L, 71R, respectively.

Since the integrated image, shown in Fig. 3, has the collateral images 71s provided with the character patterns "STEREO" 72L, 72R indicating the presence of the integrated image, these character patterns 72L, 72R enables the presence of the integrated image to be easily discriminated.

Further, the character patterns 72L, 72R have the relative positional relationships that are mutually identical to each other with respect to the monocular images 71 L, 71 R and have the patterns with the same shape and size and, hence, the character strings "STEREO" are stereotaxic on the fused image on the plane of the image frames. Accordingly, by making attempt to achieve the fusion to allow the character strings "STEREO" to overlap each other during operation to discriminate the image, the fused image can be easily formed.

The image file generating section 50c converts the integrated image, resulting from the integrated image generating section 50b, into an electronic image file with a given format. That is, the image file generating section 50c executes compression processing of the integrated image depending on needs and generates a digital image file with a given format added with collateral data (metadata). For instance, the image file generating section 50c codes areas and luminance levels of the collateral images to be placed on the integrated image and can output coded results as metadata.

The electronic image file of the integrated image, resulting from the image file generating section 50c, is supplied to the digital processing circuit 39. The digital processing circuit 39 can provide a display of the integrated image over the display screen of the LCD 40 depending on the input electronic image file. Moreover, the digital processing circuit 39 can also apply the input electronic image file through the card IF 41 to the memory card 42 for recording.

Thus, with the present embodiment, the integrated image, including the collateral images defining the left and right monocular images and zoning the areas thereof, contains the two image patterns with the same relative positional relationships and the same size and shape for the left and right monocular images as the discriminating pattern and the fusion aid pattern.

Consequently, during reproduction of the integrated image, the presence of the integrated image can be easily discriminated on the basis of the discriminating pattern and, during recognition of the image, the fused image can be easily formed using the fusion aid pattern.

In addition, the discriminating pattern may be suffice to be an image pattern available for the integrated image to be discriminated and is not limited to the characters. In addition, placement positions of the discriminating pattern may be freely set at any arbitrary position and the discriminating pattern may include only one image pattern.

Further, the fusion aid pattern may be suffice to include a pair of image patterns located with given positional relationships associated with the respective monocular images and employ the image patterns with respective shapes and sizes having a given mutual relationship depending on a display position inclusive of a depth direction in the fused image.

Furthermore, while the first embodiment has been described above with reference to an example supplied to the electronic camera, the present invention may also be applied to a sole image processing apparatus that processes an image shot by the electronic camera while making it possible to accomplish a similar function using programs of a personal computer or the like for processing a pickup image.

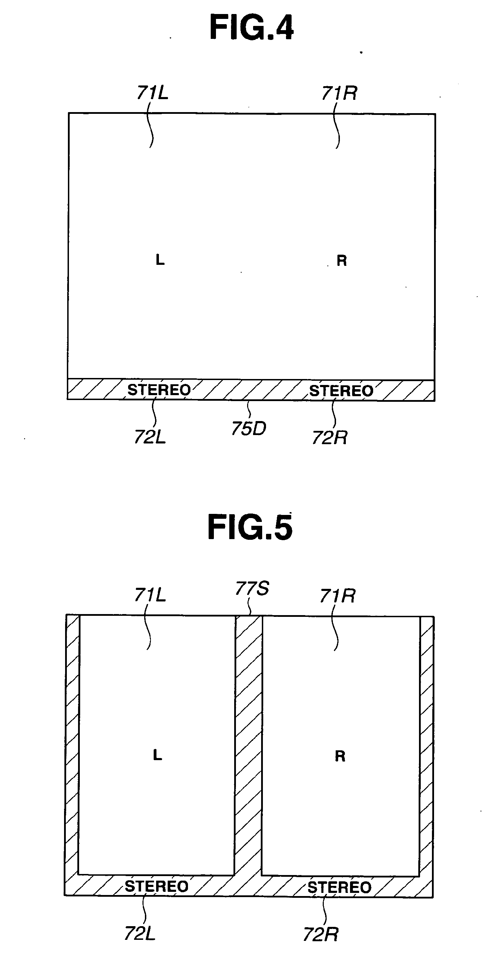

Moreover, while the present embodiment has been described with reference to an example wherein the collateral images in Fig. 3 have the zonation located in entire edge areas of the left and right monocular images, the fusion aid patterns may be suffice to be located on the collateral images in areas above or below the left and right monocular images. Accordingly, as shown in Fig. 4, a collateral image 75D may be located only in an area beneath the integrated image. In another alternative, a collateral image 77s may be located in an edge area between the left and right monocular images 71 L, 71 R excluded an area above the integrated image as shown in Fig. 5. In addition, though not shown, the collateral image may be located only in an area above the integrated image. Additionally, the collateral image may be located in a partial area of edge areas of the respective monocular images.

### (Second Embodiment)

As set forth above, the two fusion aid patterns, provided for the respective left and right monocular images, are formed in shape depending on the depth direction of the fused image. For instance, the fusion aid patterns per se may take a structure that can be viewed in stereoscopic vision.

Fig. 6 is an illustrative view showing character image patterns "T" as fusion aid patterns in case of adopting the character strings "STEREO" that are stereoscopic. As shown in Fig. 6, characters "T" have front surfaces (blanked areas in Fig. 6) that are different in pattern from each other in relative positional relationship for left and right monocular images. In contrast, patterns on reverse surfaces, which are not shown, of the characters "T" have the same relative positions for the left and right monocular images. That is, the patterns on the reverse surfaces of the characters "T" are stereotaxic on a plane of image frames playing roles as a reference position in the depth direction of the fused image and the front surfaces of the characters "T" fly out in a front side and stereoscopic characters can be recognized in a display depending on an image with side areas of the characters "T" indicated in hatched portions as shown in Fig. 6. In addition, this applies to another character.

Further, while the present embodiment has been described with reference to the front surfaces arranged in planar configurations, the present embodiment may be altered so as to enable the setting of patterns with unleveled surfaces. Moreover, patterns may also be set to have side surfaces with gradations in color and luminance.

In addition, while the various embodiments have been described above with reference to the stereo system of the two eyes type corresponding to left and right both eyes, it is needless to say that the present invention may be similarly applied to a common multiple-eye type stereo system with more than three eyes.

Further, although the various embodiments have been described above with reference to an example wherein the camera obtains one image with left and right areas located with the monocular images and the operations are performed to set the collateral image for such an image, it is apparent that the present embodiments can be supplied to a structure wherein respective monocular images, resulting from individual shootings with two cameras, are separately input and one piece of integrated image is generated on the basis of these monocular images and a collateral image.

In addition, it is clear that the present invention can be also supplied to moving images.

## Claims

1. An image processing apparatus comprising:
collateral image setting means for setting collateral images on a plurality of monocular images of the same subject obtained with a given parallax at partial or overall edge sides of the plurality of monocular images;
image pattern setting means for setting respective image patterns for placement on the collateral images with respective given relative positional relationships for the respective monocular images of the plurality of monocular images; and
integrated image generating means supplied with the plurality of monocular images for generating one integrated image on the basis of the plurality of monocular images and the collateral images placed with the image patterns.

2. The image processing apparatus according to claim 1, wherein the image pattern setting means uses patterns, which are identical to each other in a relative positional relationship with respect to the respective monocular images, as respective image patterns to be placed on the respective collateral images.

3. The image processing apparatus according to claim 1, wherein the image pattern setting means uses patterns, which are identical to each other in shape, as respective image patterns to be placed on the respective collateral images in the given relative positional relationships for the monocular images.

4. The image processing apparatus according to claim 1, wherein the image pattern setting means determines shapes of the respective image patterns and the relative positional relationships with respect to the respective monocular images to express an image, on the basis of the respective image patterns, in three dimensions under a situation where the respective monocular images of the integrated image are fused for recognition of one piece of the image.

5. The image processing apparatus according to claim 1, wherein the plurality of monocular images are input to the integrated image generating means in one image arranged by shooting means.

6. The image processing apparatus according to claim 1, wherein the image patterns, set by the image pattern setting means, are character patterns.

7. The image processing apparatus according to claim 1, wherein the image patterns, set by the image pattern setting means, include patterns representing that the integrated image is a stereoscopic image.

8. The image processing apparatus according to claim 1, further comprising image file generating means for generating an image file with a given format on the basis of the integrated image and a given collateral data.
